(19) **Europäisches Patentamt / European Patent Office / Office européen des brevets**

(11) **EP 4 645 170 A1**

(12) # EUROPEAN PATENT APPLICATION

(43) Date of publication:
**05.11.2025  Bulletin 2025/45**

(21) Application number: **24173391.4**

(22) Date of filing: **30.04.2024**

(51) International Patent Classification (IPC):
**G06N 3/08** (2023.01)     **G06N 5/01** (2023.01)

(52) Cooperative Patent Classification (CPC):
**G06N 3/08; G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventor: **Yang, Yinchong**
**85579 Neubiberg (DE)**

(74) Representative: **Siemens Patent Attorneys**
**Postfach 22 16 34**
**80506 München (DE)**

(54) **QUANTIFYING ROBUSTNESS OF PREDICTION MODELS**

(57)   Methods and systems for efficiently quantifying the robustness of a prediction model are disclosed. Embodiments include providing an input data to be predicted, a measure of distortion, and a distortion norm p; performing a forward pass through the prediction model to obtain a prediction value based on the input data; determining, using a Particle Swam Optimization, PSO, algorithm, a maximum value of a q-norm of a gradient of the prediction model within a bounded region around the input data, the bounded region being defined by the measure of distortion and the distortion norm p; calculating a prediction radius of the prediction model based on the determined maximum value and the measure of distortion; and determining a lower and upper bound of a prediction range of the prediction model based on the prediction value and the prediction radius, the lower and upper bounds representing possible values the prediction model is able to output for the given input data.

FIG 1

100

Providing to a prediction model an input data to be predicted, a measure of distortion, and a distortion norm p; — 102

Performing a forward pass through the prediction model to obtain a prediction value based on the input data; — 104

Determining, using a Particle Swam Optimization, PSO, algorithm, a maximum value of a q-norm of a gradient of the prediction model within a bounded region around the input data; — 106

Calculating a prediction radius of the prediction model based on the determined maximum value and the measure of distortion; — 108

Determining a lower and upper bound of a prediction range of the prediction model based on the prediction value and the prediction radius. — 110

EP 4 645 170 A1

**Description**

**TECHNICAL FIELD**

The present disclosure relates to a computer-implemented method and a system for automatically quantifying robustness of a supervised machine learning model, which includes but is not limited to image classification, object detection and/or time series forecasting, preferably for critical object detection applications.

**BACKGROUND**

Object detection technologies present in critical applications such as autonomous driving systems, industrial manufacturing processes or safety systems rely on robust object detection models resilient to perturbations in the input data to be predicted/classified. Therefore, it should be appreciated that classification of input data may result in a labeled set of data that has labels or annotations representing the corresponding classes into which a non-labeled input data set is classified. This may be an intermediate step in performing other operations by systems such as vehicle control and/or safety systems.

For example, in a security domain, the recognition system may operate to control access to physical premises, data assets, computing assets, or any other type of asset to which access is to be restricted. In a vehicle control and/or safety system, the system may operate to control other systems of the vehicle to maintain the safety of the vehicle and its passengers, such as automatic braking, steering, and the like. In an industrial domain, industrial plants usually comprise distinct components, parts, modules, or units with a multiplicity of individual functions. The units and their functions have to be controlled and regulated in an interacting manner. The increasing degree of digitalization allows for e.g., manufacturing, or industrial installation of products in a production line of the industrial plant to be performed by robot units or other autonomous units in an automatic manner. The manufacturing process itself must be monitored and controlled as well. The quality of the resulting manufactured products must be monitored to identify early degradation of the product and to derive corrective control measures for the manufacturing components, e.g., to adapt settings of the component.

As neural networks (NNs) are becoming a core technique deployed in a wide range of applications, including safety-critical tasks, certifying robustness of a NN against adversarial perturbations has become an important topic in machine learning. For example, in image learning tasks such as image classification or content captioning, visually indistinguishable adversarial examples can be easily crafted from natural images to alter a NN's prediction result. Given a NN (possibly with a deep and complicated network architecture, i.e. a deep NN (DNN)), one is interested in certifying the (local) robustness of an arbitrary natural example $x_0$ by ensuring all its neighborhood has the same consistent prediction. For example, from a geometrical perspective, the minimum distance of a misclassified nearby example to $x_0$ is the least adversarial distortion required to alter the target model's prediction, which is also the largest possible robustness guarantee for $x_0$. Unfortunately, finding the minimum distortion of adversarial examples in NNs with widely used activation functions such as Rectified Linear Unit (ReLU) activations, is known to be an NP-complete problem. This makes formal verification techniques computationally demanding even for small-sized NNs and suffer from scalability issues, thus posing a very challenging issue for deploying real-world machine learning systems especially for critical applications.

Generally, the robustness of an object detection model is quantified with a heuristic search approach. The most intuitive and easy way to implement such a method is to perform a large number of unguided perturbations and forward passes. However, this is prone to the "curse of dimensionality", thus making such an object detection method very inefficient, since such methods are typically based on DNNs and a thorough search with tens of thousands of forward passes require large amount of computation resources.

Therefore, there is a need to provide a method and a system which automatically provides a robustness quantification for industry-grade or security-grade deep neural network-based object detection models with reduced computational complexity.

**SUMMARY**

The present disclosure is defined by the independent claims. Dependent claims describe embodiments thereof. This summary is provided to introduce a selection of concepts in a simplified form that are further described below in the detailed description. This summary is not intended to identify key features or essential features of the claimed subject matter, nor is it intended to be used to limit the scope of the claimed subject matter.

The present disclosure provides a novel approach to estimating a lower bound of the Lipschitz constant which thus enables an Interval Bound Propagation (IBP) technique to derive a smaller range in the prediction space by estimating the lower bound of the Lipschitz constant for (deep) feed-forward neural networks both accurately and efficiently using a Particle Swarm Optimization (PSO) algorithm. Said approach yields significantly smaller ranges in the prediction space compared to the standard IBP for neural networks including layers other than fully-connected and/or convolutional layers as well as a class of ML models that are not neural networks (e.g., Gaussian Process models, Support Vector Machines, Kernel Regressions, K-Nearest Neighbors, etc.) and lends itself to a distributed parallel implementation using modern deep learning libraries such as PyTorch and TensorFlow, thus leading to efficient quantification of robustness of large-scale networks.

Embodiments of the present disclosure are generally directed to solutions that enable quantification of robustness of large-scale networks. Accordingly, a computer-implemented method for quantifying robustness of predictions of a prediction model against perturbations in input data is provided. The method comprises:

providing an input data to be predicted, a measure of distortion, and a distortion norm p;
performing a forward pass through the prediction model to obtain a prediction value based on the input data;
determining, using a Particle Swam Optimization, PSO, algorithm, a maximum value of a q-norm of a gradient of the prediction model within a bounded region around the input data, the bounded region being defined by the measure of distortion and the distortion norm p;
calculating a prediction radius of the prediction model based on the determined maximum value and the measure of distortion; and
determining a lower and upper bound of a prediction range of the prediction model based on the prediction value and the prediction radius, the lower and upper bounds representing possible values the prediction model is able to output for the given input data.

Thus, the method described above provides efficient quantification of robustness against perturbations in input data of prediction models based on large-scale networks.

In some embodiments, the method may further comprise comparing the prediction range with a predefined robustness threshold range; and in response to the prediction range being smaller than the predefined robustness threshold range, certifying the prediction model as robust, and applying the prediction model in a controlling and/or a monitoring application.

In one or more embodiments, the bounded region may be defined as a p-norm hyperball around the input data and may have a radius equal to the measure of distortion.

In one or more embodiments, the q-norm may be defined as the ratio of p to p - 1.

In one or more embodiments, the PSO algorithm may be initialized with a swarm of particles in a search space within the bounded region around the coordinates of the input data to be predicted.

In some embodiments, the maximum value of the q-norm of the gradient of the prediction model may represent an estimate of a lower bound of the Lipschitz constant of the prediction model.

In some embodiments, the prediction radius of the prediction model may be defined as a product of the estimate of the lower bound of the Lipschitz constant and the measure of distortion.

In some embodiments, the prediction model may be an object detection model.

In some embodiments, the input data may comprise unperturbed image data.

In one or more embodiments, the object detection model may output a class probability for each bounding box of a set of bounding boxes depending on the image data, wherein each bounding box may specify a location area in the image data, and wherein each of the bounding boxes having a class probability higher than a predefined probability value may be a predicted bounding box.

In one or more embodiments, the perturbed image data may be sampled from the p-norm hyperball around the unperturbed image data.

In one or more embodiments, the controlling and/or monitoring application may include an industrial manufacturing process, autonomously driving of a vehicle, or a security domain application which may include controlling access to physical premises, data assets and/or computing assets to which access is to be restricted.

Other embodiments may include a non-transitory computer-readable storage medium storing computer-executable instructions which, when executed by at least one processor, may cause the at least one processor to perform the method according to any one of the methods described above.

Other embodiments may include a computer program product comprising instructions which, when executed by at least one processor, may cause the at least one processor to perform the method according to any one of the methods described above.

Other embodiments may include a system for quantifying robustness of predictions of a prediction model against perturbations in input data, the system comprising:
one or more processing devices; and
one or more storage devices, the one or more storages devices storing computer-readable instructions that, when executed by the one or more of the processors, cause the one or more of the processors to perform the method according to any one of the methods described above.

## BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:

> Fig. 1 is a schematic diagram illustrating a computer-implemented method for automatically quantifying robustness of an object prediction model, according to the present disclosure.
> Fig. 2 is a schematic diagram illustrating a system for automatically quantifying robustness of an object prediction model, according to the present disclosure.

## DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

Object detection models may be applied in an industrial environment to perform quality control, e.g., to detect misplacements on printed circuit boards, as well as for controlling autonomous movement of robots on the shop floor in an industrial plant. In autonomous driving vehicles such as cars but also trains, object detection models are applied to detect obstacles which trigger control instructions to adapt the movement of the vehicle to the recognised environmental situation. For the safety of the industrial environment or traffic environment it is extremely important that the applied object detection models are not only reliable in terms or the correctness of the output prediction, but the models are robust in terms of providing the correct prediction even when the input image data is disturbed due to natural disturbances and due to hostile attacks. In machine learning, robustness quantification refers to a task of identifying the maximum degree of data perturbation that does not change the model's prediction. For instance, a binary image classification model may classify a given image as class A with confidence 90% and class B with 10%. When the brightness of the image is changed towards 0, implying complete dark, it may be observed that the confidence of class A will decreases while the confidence of class B increases. At some point, the confidence of class B will overtake the confidence of A and the model thus changes its prediction.

But there are also artificial, e.g., hostile perturbations. Commonly, object detection models are structured as artificial deep neural networks. By identifying patterns that these neural networks use to function, attackers can modify input data in such a way that the deep neural network finds a match that human observers would not recognize. For example, an attacker can make subtle changes to an image such that the deep neural network finds a match with respect to an object class even though the image looks to a human nothing like the matched object. Such manipulation is termed an "adversarial attack". Finding the exact maximum value of the perturbation degree where the model retains its original prediction provides a quantitative measurement of the model's robustness.

In response to fragility of NNs to adversarial attacks, there has been considerable effort in recent years to improve and quantify the robustness of NNs against adversarial attacks and input perturbations. In order to certify and/or improve the robustness of NNs, one must be able to bound the possible outputs of a neural network over a region of input space. This can be done either locally around a specific input, or globally by bounding the sensitivity of the function to input perturbations, i.e., the Lipschitz constant. A central problem in learning-based control systems is to provide stability or safety guarantees for a feedback control loop when a learning-enabled component, such as a DNN, is introduced in the control loop.

The Lipschitz constant of a neural network controller bounds its gain. Therefore, a tight estimate can be useful for certifying the stability and robustness of the closed-loop system to input perturbations.

Tight estimation of the Lipschitz constant for DNNs is useful in many applications ranging from robustness certification of classifiers to stability analysis of closed-loop systems with reinforcement learning controllers. However, as DNNs have highly complex and non-linear structures, estimating the Lipschitz constant both accurately and efficiently has remained a significant challenge.

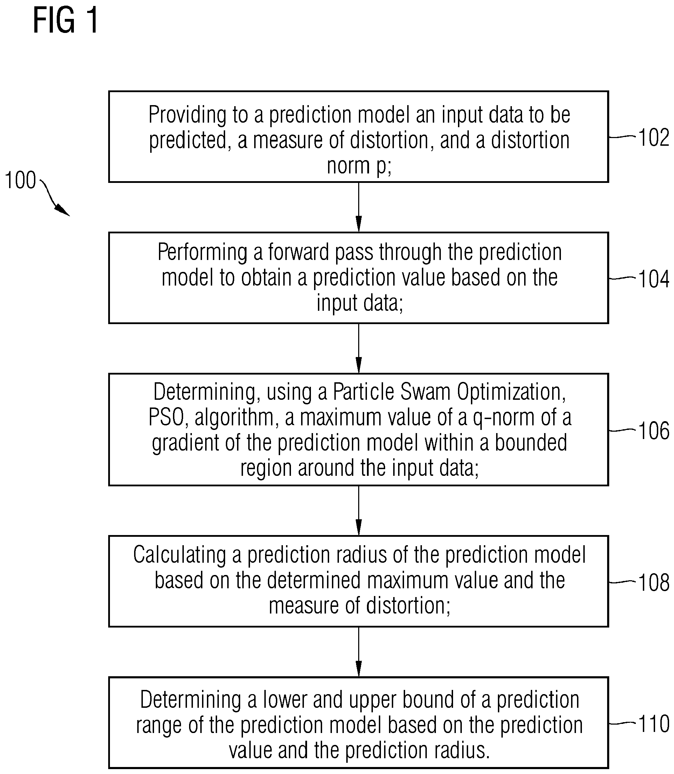

A computer-implemented method for automatically quantifying a robustness of an object detection model is proposed, illustrated in Fig.1 and described in detail in the following. The object detection model may be applied for a controlling task and/or a monitoring application in e.g., an industrial manufacturing shop floor or an autonomous driving environment.

Conventional techniques have shown that bounded prediction provides valuable information that can verify the robustness of a predictive machine learning (ML) model provably. Specifically, if one knows that given an input $x \in \mathbb{R}^d$ to a ML model denoted as $f: \mathbb{R}^d \to \mathbb{R}^k$ ranges from $[\underline{x}, \overline{x}]$ elementwise, i.e., $x_j \in [\underline{x_j}, \overline{x_j}] \ \forall_j \in [1, p]$, the prediction of the model ranges correspondingly in $[\underline{f}, \overline{f}]$, one would be able to prove whether this prediction range is so large that the model cannot be seen as robust. For instance, if the *argmax* in any $f^* \in [\underline{f}, \overline{f}]$ is different from that in f, then the model is in fact predicting a different class and is not robust (Weng et al. 2018 [3]). However, deriving the lower and upper bounds of $[\underline{f}, \overline{f}]$ in prediction given the lower and upper bounds in input $[\underline{x}, \overline{x}]$ is not a trivial task, since modern ML models, typically neural networks, consist of complex non-linear transformations (Zhang et al. 2018 [4], Mao et al. 2023 [1]).

Interval bound propagation (IBP) (Gowal et al. 2018 ([2]) provides a fast and stable learning approach, which results in NNs that are provably robust to norm-bounded perturbations for image inputs, by minimizing an upper bound on the worst-case loss over all perturbations bounded in a given norm. IBP scales well to large NNs including fully connected and convolutional layers.

IBP is a simple but popular robustness certification method, and it scales well to large NNs including fully connected and convolutional layers (Gowal et al. 2018 [2], Mao et al. 2023 [1]). IBP may be used to prove the robustness of a classifier $f$ for a given input region $B^\varepsilon(x)$. It is based on propagating the input region $B^\varepsilon(x)$ through a neural network by computing so-called "BOX" over-approximations (each dimension is described as an interval) of the hidden state after every layer until the output space is reached. In the output space is then checked whether all points in the resulting over-approximation of the network's reachable set yield the correct classification layers (Mao et al. 2023 [1]). IBP can be summarized as follows. For any layer that can be expressed as

$$z_k = W z_{k-1} + b,$$

including fully connected and convolutional layers (with reformulation), and input range denoted as

$$\left[ \overline{z}_{k-1}, \underline{z}_{k-1} \right],$$

the range of the layer's output $[\overline{z}_k, \underline{z}_k]$ can be calculated as:

$$m_{k-1} = \frac{\overline{z}_{k-1} - \underline{z}_{k-1}}{2}$$

$$r_{k-1} = \frac{\overline{z}_{k-1} + \underline{z}_{k-1}}{2}$$

$$m_k = W m_{k-1} + b$$

$$r_k = |W| r_{k-1}$$

$$\overline{z}_k = m_k + r_k$$

$$\underline{z}_k = m_k - r_k$$

where $|W|$ denotes the elementwise absolute value of weight matrix $W$. Since activation functions, such as Sigmoid, Tanh, ReLU etc. are monotonic in their input, the activated output range simply becomes (for a ReLU activation function a) $[\sigma(\overline{z}_k), \sigma(\underline{z}_k)]$.

Lipschitz constant quantifies the degree of change in the function domain proportional to the change in its codomain. It plays an important role in analyzing the robustness of machine learning (ML) models. Intuitively, a robust ML model is one that is insensitive to distortion in its input data and one that has a small Lipschitz constant. Calculating the Lipschitz constant would provide direct metrics on the model's robustness, in that for each unit sized change in the input space one could derive the corresponding change in the output space. Furthermore, an estimated bound on the Lipschitz constant enables IBP. As defined, the (local) Lipschitz constant satisfies the following inequality,

$$|f(\boldsymbol{x}_1) - f(\boldsymbol{x}_0)| \leq L \cdot \|\boldsymbol{x}_1 - \boldsymbol{x}_0\|_p,$$

which can be rearranged as

$$-L \cdot \|\boldsymbol{x}_1 - \boldsymbol{x}_0\|_p \leq f(\boldsymbol{x}_1) - f(\boldsymbol{x}_0) \leq L \cdot \|\boldsymbol{x}_1 - \boldsymbol{x}_0\|_p$$

and thus

$$f(\boldsymbol{x}_0) - L \cdot \|\boldsymbol{x}_1 - \boldsymbol{x}_0\|_p \leq f(\boldsymbol{x}_1) \leq f(\boldsymbol{x}_0) + L \cdot \|\boldsymbol{x}_1 - \boldsymbol{x}_0\|_p,$$

which can be formulated using IBP with respect to lower and upper bounds as:

$$\underline{f} = m - r,$$

$$\overline{f} = m + r,$$

with

$$m = f(\boldsymbol{x}_0)$$

$$r = L \cdot \|\boldsymbol{x}_1 - \boldsymbol{x}_0\|_p$$

If the (true but unknown) Lipschitz constant $L$ is replaced with its estimated lower bound $\hat{L}_f$, a smaller range is derived in the prediction space. The claim that the object detection model remains robust in range $[\underline{f}, \overline{f}]$ i.e. $[f(\boldsymbol{x}_0) - \hat{L}_f \cdot \|\boldsymbol{x}_1 - \boldsymbol{x}_0\|_p, f(\boldsymbol{x}_0) + \hat{L}_f \cdot \|\boldsymbol{x}_1 - \boldsymbol{x}_0\|_p]$ still holds but is more conservative / pessimistic. In other words, if the estimated radius $\hat{L}_f \cdot \|\boldsymbol{x}_1 - \boldsymbol{x}_0\|_p$ already results in e.g., the change in the maximum logits values, the true but infeasible radius $L \cdot \|\boldsymbol{x}_1 - \boldsymbol{x}_0\|_p$ will result in the change in maximum logits that can only be equally large or even larger. However, it may occur that the estimated radius may not change the prediction while the true radius (based on the true Lipschitz constant) does. In this case, one would have drawn the wrong conclusion that the model is robust with respect to a perturbation $\boldsymbol{x}_1 = \boldsymbol{x}_0 + \delta$ while in fact it is not. It is therefore essential to maximize $\|\nabla_x f(x)\|_q$ as best as possible. That is, the smaller the gap between $\hat{L}_f$ and $L$, the more trustworthy the robustness certification would become.

The theoretical background of the present disclosure is the observation that the true but unknown Lipschitz constant, denoted $L_f$ as of any function $f$ can be bounded as

$$\hat{L}_f = \max_{x \in B(\boldsymbol{x}_0, \epsilon, p)} \|\nabla_x f(x)\|_q \leq L_f = \sup_{x \in \overline{X}} \|\nabla_x f(x)\|_q \leq \prod_{k=1}^{K} L_{f_k}$$

where the function $f$ can be decomposed into $K$ operations with respective Lipschitz constant $L^{[k]}$ where the function $f$ can be decomposed into $K$ operations $(f_k)$ with respective Lipschitz constant $L_{f_k}$ for $k \in [1, K]$. Here the codomain of $f$ is denoted as $X$ and use $B(\boldsymbol{x}_0, \varepsilon, p) = \{x \mid |\boldsymbol{x} - \boldsymbol{x}_0|_p \leq \varepsilon\}$ to represent a hyperball around unperturbed input data $\boldsymbol{x}_0$ with p-norm such that

$$\frac{1}{q} + \frac{1}{p} = 1$$

. Since it is often infeasible to derive the Lipschitz constant of a function as complex as a model representing a neural network, an estimation of the lower and upper bounds of the Lipschitz constant can already serve as a metrics to evaluate the robustness of the model.

Weng et al. 2018 ([3]) quantifies the left side of this inequation (i.e., the lower bound of the Lipschitz constant) by fitting an inverse Weibull distribution to the batchwise maxima of the gradient norms produced by sampling from a hyperball around each data point. The maximum likelihood estimate (MLE) of the Weibull location parameter is expected to provide a better approximation of the true maximum than the empirical maximum. However, the major computational challenge with this approach is the number of samples necessary to generate a good MLE. Known as the "curse of dimensionality", one would need exponentially more samples as the dimension of the input increases. Unfortunately, modern deep neural networks that operate in domains such as high definition (HD) images often have a high dimensional input space.

To this end, the present disclosure provides a dedicated numerical optimization based on a Particle Swarm Optimization (PSO) algorithm to approach the maximum gradient norm within the hyperball around unperturbed input data $x_0$. Gradient update would be the most efficient approach finding the maximum. However, this requires calculating the second order derivative of the function $f$ and thus only applicable for models but not necessarily smaller input dimensionality. Bayesian Optimization (BO) may capture the exploration-exploitation trade-off in a principled manner and may achieve best result given limited number of samples. BO is however proven to perform poorly in high dimensional input space. PSO provides the advantage that modern deep learning libraries such as PyTorch and TensorFlow may be used for the optimization on CPU and GPU architectures such that they can perform inference (and training) on batches of data in parallel much more efficient than on individual data points. In other words, the clock time to infer on, for example, 256 data samples, is not significantly longer than that on a single data point. Algorithms such as BO are sequential in the sense that the position to perform $i + 1$ sampling depends on the evaluation on the $i$ sample. It is thus impossible to exploit modern implementations of the neural networks. PSO, on the other hand, relies on a swarm of data points being evaluated simultaneously and benefits largely from the parallelization power. It is a known challenge that the outcome of PSO is sensitive towards the initialization. However, in the present disclosure, there is a well-defined initial point, i.e., the unperturbed data point $x_0$, around which, a swarm of particles according to PSO searches for the maximum gradient norm within the hyperball. This reduces the effort of experimenting with different random initial points as is common while using PSO algorithms. Thus, the swarm of particles efficiently finds an optimal value representing the maximum gradient norm, which in turn represents an estimate of the lower bound of the Lipschitz constant as described above.

PSO is an important class of evolutionary algorithm which defines a swarm of particles. The particles in the swarm may then be changed according to predefined rules. The change in the particle values may be determined by their previous position and a best known position of the particle over the entire search space. The particles are randomly initialized at coordinates around coordinates of the unperturbed input data $x_0$ within the hyperball at the beginning of the search process, and then after every iteration, the position and velocity of each particle is changed in such a way that it moves towards a desired personal best (pbest) and global best (gbest) location. The efficiency of local search and convergence towards the global optimum solution (i.e. towards the maximum gradient norm representing the estimate of the lower bound of the Lipschitz constant) are obtained by weighting acceleration coefficients with random terms. Both pbest and gbest locations generate separate random numbers for acceleration. The PSO algorithm could be described as follows.

One may consider a swarm of $n$-particles to be deployed within the search space, wherein the j-th particle in the swarm may be represented by $P_i = (p_1, p_2, ..., p_n)$ and its velocity may be represented by another vector $V_i = (v_1, v_2, ..., v_n)$. Let the best position visited by the i-th particle be denoted by $P_{best(i)}$ and the overall (global) best particle be denoted as $P_{bestglobal}$ (notice that the best global particle can only be one within the swarm at all times). The position and velocity of the j-th particle can be updated by:

$$P_i^{(t+1)} = P_i^{(t)} + V_i^{(t+1)}$$

and

$$V_i^{(t+1)} = W \cdot V_i^{(t)} + c_1 \cdot r_1 \cdot \left( P_{best(i)}^{(t)} - P_i^{(t)} \right) + c_2 \cdot r_2 \left( P_{bestglobal}(t) - P_i^{(t)} \right)$$

Where in the update equation of the velocity, the first term represents an inertia term which makes the particle move in the same direction and with the same velocity. The second term represents a "cognitive" part (or personal influence of the particle), which improves the individual particle by making the particle move to a position better than the current one. The third term represents a "social" part (or global influence of the particle), which makes the particle follow the best neighbor's direction. $c_1$ and $c_2$ may be non-negative constants known as the learning factors. Also, $r_1$ and $r_2$ may be some random numbers generated in the range [0,1]. W denotes the inertia weight and it may be a positive constant. This parameter is important for balancing the global search, also known as "exploration" (e.g., when higher values are set), and local search, known as "exploitation" (when lower values are set). To prevent divergence ("explosion") the inertia weight may be smaller than 1. The two other parameters $c_1$ and $c_2$ may be freely selected or derived via a constriction approach, as follows:

$$W = \frac{2}{abs\left(2 - \phi - \sqrt{\phi^2 - 4\phi}\right)}$$

Where $\phi = c_1 + c_2$. For example, if $\phi$ is set to a value of 4.2, then $W = 0.64$. The particle velocity $V_i^{(t)} \in [V_{\min}, V_{max}]$, where $V_{max}$ is a maximum velocity. If the velocity exceeds $V_{max}$ in any coordinate it will be truncated to $V_{max}$ to avoid search explosion. If it is too high, the particles may skip over good solutions and if it is too small, particles may be explored too slowly, and good solutions may not be found.

The PSO parameters may also be tuned by using other methods or by fine-tuning during the optimization, e.g., by means of fuzzy logic. The space of PSO parameters is thus not limited to the above-mentioned parameters and the skilled person would recognize that an array of different PSO parameters may be further explored to get optimal results.

Fig. 1 is schematic diagram illustrating a computer-implemented method (100) for efficient quantification of robustness of a prediction model, which may include large-scale networks, against perturbations in input data according to the present disclosure. The method may comprise providing (102) providing the prediction model an input data to be predicted, a measure of distortion, and a distortion norm $p$. In step (104), a forward pass through the prediction model is performed to obtain a prediction value based on the input data. Next, in step (106), a maximum value of a $q$-norm of a gradient of the prediction model is determined using a Particle Swam Optimization, PSO, algorithm, wherein the determination is performed within a bounded region around the input data, and wherein the bounded region is defined by the measure of distortion and the distortion norm $p$. In step (108), a prediction radius of the prediction model is calculated based on the determined maximum value and the measure of distortion. Then, in step (110), measures of robustness are determined in the form of a lower and upper bound of a prediction range of the prediction model based on the prediction value and the prediction radius. The lower and upper bounds represent possible values the prediction model is able to output for the given input data.

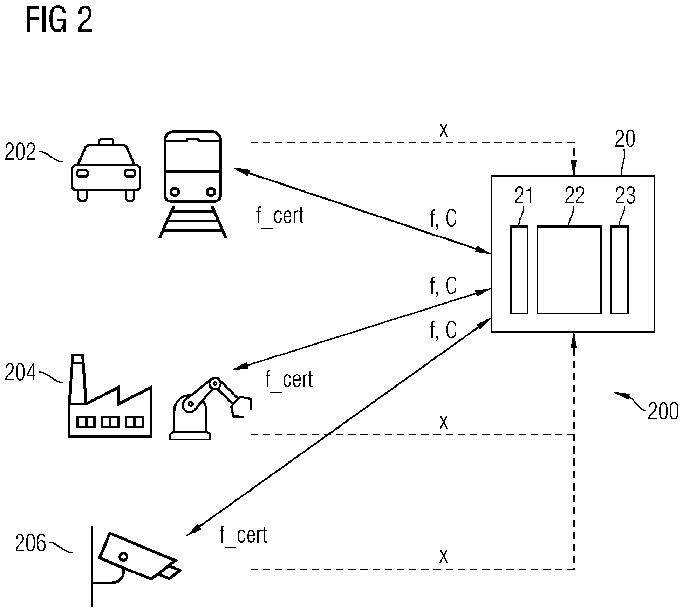

Fig. 2 is a schematic diagram illustrating a system (200) for automatically quantifying robustness of an object prediction model, according to the present disclosure. The system (200) may be applied in monitoring or controlling applications/tasks in a transportation environment (202), e.g., in an autonomous driving train or vehicle, in an industrial environment (204), e.g., in a manufacturing process or motion control of a robot in an industrial shop floor, or in a security domain (206) application including controlling access to physical premises, data assets and/or computing assets to which access is to be restricted.

The system (200) may include a computing device (20), which may comprise an input unit (21), a processing unit (22) and an output unit (23). The input unit (21) is configured to receive an object detection model $f$ which is trained to output a predicted object in terms of a location in an image data $x$ and of an object class $C$ out of a set of object classes when the image data $x$ is input into the object detection model. The input unit (21) is further configured to receive a measure of distortion, and a distortion norm $p$ for the image data $x$. The processing unit (22) is configured to perform a forward pass through the object detection model $f$ to obtain a prediction value based on the image data and to determine, using a Particle Swam Optimization, PSO, algorithm, a maximum value of a $q$-norm of a gradient of the object detection model $f$ within a bounded region around unperturbed image data $x_0$, the bounded region being defined by the measure of distortion and the distortion norm $p$. The processing unit (22) is further configured to calculate a prediction radius of the object detection model $f$ based on the determined maximum value and the measure of distortion, and to determine a lower and upper bound of a prediction range of the object detection model $f$ based on the prediction value and the prediction radius, the lower and upper bounds representing possible values the object detection model $f$ is able to output for the given (possibly perturbed) input data $x$. Thus, the processing unit (22) is configured to determine a robustness value of the object detection model $f$ as the lower and upper bound of the prediction range for a perturbed image data $x_p$ deviating from unperturbed image data $x_0$ of the image data $x$. The processing unit (22) is then further configured to compare the prediction range with a predefined robustness threshold range, and in response to the prediction range being smaller than the predefined robustness threshold range, certifying the object detection model $f$ as robust, and applying, via the output unit (23), the certified object detection model $f_{cert}$ in the controlling and/or monitoring application (202, 204, 206).

In one example configuration, the computing device (20) may include further processing units (processors) and memory. The processors may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. The processors may be programmable hardware capable of executing software instructions stored (to perform the methods described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the computing device (20) of the system (200) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system (200) may also have input device(s) such as keyboard, mouse, pen, voice input, etc. and/or output device(s) such as a display, speakers, printer, etc. Also included in the system (200) may be one or more communication connections, such as LAN, WAN, point to point, etc. In embodiments, the connections may be operable to facilitate point-to-point communications, connection-oriented communications, connectionless communications, etc. The system (200) may further include interface circuitry configured to control input and output (I/O) data paths of the system (200). For example, such I/O data paths may include data paths for receiving from user or applications (202, 204, 206) object detection models to be certified for robustness.

The methods and systems described herein yield significantly smaller ranges in the prediction space (compared to the standard IBP) for neural networks including layers other than fully-connected and/or convolutional layers as well as a class of ML models that are not neural networks (e.g., Gaussian Process models, Support Vector Machines, Kernel Regressions, K-Nearest Neighbors, etc.) and lends itself to a distributed parallel implementation using modern deep learning libraries such as PyTorch and TensorFlow, thus leading to efficient quantification of robustness of large-scale networks.

Although the present disclosure has been described in accordance with preferred embodiments, it should be clear for the person skilled in the art that modifications are possible in all embodiments. Further possible implementations or alternative solutions of the invention also encompass combinations - that are not explicitly mentioned herein - of features described above or below regarding the embodiments. The person skilled in the art may also add individual or isolated aspects and features to the most basic form of the present disclosure.

## LIST OF REFERENCES

[1] Mao, Yuhao, et al. "Understanding Certified Training with Interval Bound Propagation." arXiv preprint arXiv:2306.10426 (2023).

[2] Gowal, Sven, et al. "On the effectiveness of interval bound propagation for training verifiably robust models." arXiv preprint arXiv:1810.12715 (2018).

[3] Weng, Tsui-Wei, et al. "Evaluating the robustness of neural networks: An extreme value theory approach." arXiv preprint arXiv:1801.10578 (2018).

[4] Zhang, Huan, et al. "Efficient neural network robustness certification with general activation functions." Advances in neural information processing systems 31 (2018).

## Claims

1. A computer-implemented method for quantifying robustness of predictions of a prediction model against perturbations in input data, the method comprising:

   providing an input data to be predicted, a measure of distortion, and a distortion norm $p$;
   performing a forward pass through the prediction model to obtain a prediction value based on the input data;
   determining, using a Particle Swam Optimization, PSO, algorithm, a maximum value of a $q$-norm of a gradient of the prediction model within a bounded region around the input data, the bounded region being defined by the measure of distortion and the distortion norm p;
   calculating a prediction radius of the prediction model based on the determined maximum value and the measure of distortion; and
   determining a lower bound and an upper bound of a prediction range of the prediction model based on the prediction value and the prediction radius, the lower bound and the upper bound representing possible values the prediction model outputs for the given input data.

2. The computer-implemented method of claim 1, further comprising:

comparing the prediction range with a predefined robustness threshold range; and
in response to the prediction range being smaller than the predefined robustness threshold range, certifying the prediction model as robust, and applying the prediction model in a controlling and/or a monitoring application.

3. The computer-implemented method of claim 1 or 2, wherein the bounded region is defined as a p-norm hyperball around the input data and having a radius equal to the measure of distortion.

4. The computer-implemented method of any of the preceding claims, wherein the q-norm is defined as the ratio of $p$ to $p-1$.

5. The computer-implemented method of any of the preceding claims, wherein the PSO algorithm is initialized with a swarm of particles in a search space within the bounded region around coordinates of the input data to be predicted.

6. The computer-implemented method of any of the preceding claims, wherein the maximum value of the $q$-norm of the gradient of the prediction model represents an estimate of a lower bound of the Lipschitz constant of the prediction model.

7. The computer-implemented method of any of the preceding claims, wherein the prediction radius of the prediction model is defined as a product of the determined lower bound of the Lipschitz constant and the measure of distortion.

8. The computer-implemented method of any of the preceding claims, wherein the prediction model is an object detection model.

9. The computer-implemented method of any of the preceding claims, wherein the input data comprises unperturbed image data.

10. The computer-implemented method of any of the preceding claims, wherein the object detection model outputs a class probability for each bounding box of a set of bounding boxes depending on the image data, wherein each bounding box specifies a location area in the image data, and wherein each of the bounding boxes having a class probability higher than a predefined probability value is a predicted bounding box.

11. The computer-implemented method of any of the preceding claims, wherein the perturbed image data is sampled from the $p$-norm hyperball around the unperturbed image data.

12. The computer-implemented method of any of the preceding claims, wherein the controlling and/or monitoring application includes an industrial manufacturing process, autonomously driving of a vehicle, or a security domain application including controlling access to physical premises, data assets and/or computing assets to which access is to be restricted.

13. A non-transitory computer-readable storage medium storing computer-executable instructions that, when executed by at least one processor, cause the at least one processor to perform the method of according to any of claims 1 to 12.

14. A computer program product comprising instructions which when executed by at least one processor, cause the at least one processor to perform the method according to any of claims 1 to 12.

15. A system for quantifying robustness of predictions of a prediction model against perturbations in input data, the system comprising:

   one or more processing devices; and
   one or more storage devices, the one or more storages devices storing computer-readable instructions that, when executed by the one or more of the processors, cause the one or more of the processors to perform the method according to any of claims 1 to 12.

FIG 1

100

| Providing to a prediction model an input data to be predicted, a measure of distortion, and a distortion norm p; | 102 |

| Performing a forward pass through the prediction model to obtain a prediction value based on the input data; | 104 |

| Determining, using a Particle Swam Optimization, PSO, algorithm, a maximum value of a q-norm of a gradient of the prediction model within a bounded region around the input data; | 106 |

| Calculating a prediction radius of the prediction model based on the determined maximum value and the measure of distortion; | 108 |

| Determining a lower and upper bound of a prediction range of the prediction model based on the prediction value and the prediction radius. | 110 |

# FIG 2

## EUROPEAN SEARCH REPORT

**Application Number**

EP 24 17 3391

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUEZHU XU ET AL: "Compositional Estimation of Lipschitz Constants for Deep Neural Networks", ARXIV.ORG, CORNELL UNIVERSITY LIBRARY, 201 OLIN LIBRARY CORNELL UNIVERSITY ITHACA, NY 14853, 5 April 2024 (2024-04-05), XP091721518, * the whole document * | 1-15 | INV. G06N3/08 G06N5/01 |
| A | LI ZAITANG ET AL: "GREAT Score: Global Robustness Evaluation of Adversarial Perturbation using Generative Models", ARXIV.ORG, CORNELL UNIVERSITY LIBRARY, 201 OLIN LIBRARY CORNELL UNIVERSITY ITHACA, NY 14853, 19 April 2023 (2023-04-19), XP091492810, * the whole document * | 1-15 | |
| A | UGOLOTTI ROBERTO ET AL: "Particle Swarm Optimization and Differential Evolution for model-based object detection", APPLIED SOFT COMPUTING, ELSEVIER, AMSTERDAM, NL, vol. 13, no. 6, 13 December 2012 (2012-12-13), pages 3092-3105, XP028584900, ISSN: 1568-4946, DOI: 10.1016/J.ASOC.2012.11.027 * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 5 November 2024 | Manfrin, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAO, YUHAO et al.** Understanding Certified Training with Interval Bound Propagation. *arXiv preprint arXiv:2306.10426*, 2023
- **GOWAL, SVEN et al.** On the effectiveness of interval bound propagation for training verifiably robust models.. *arXiv preprint arXiv:1810.12715*, 2018

- **WENG, TSUI-WEI et al.** Evaluating the robustness of neural networks: An extreme value theory approach.. *arXiv preprint arXiv:1801.10578*, 2018
- **ZHANG, HUAN et al.** Efficient neural network robustness certification with general activation functions. *Advances in neural information processing systems*, 2018, vol. 31